# EUROPEAN PATENT SPECIFICATION

(11) **EP 2 200 152 B1**
(45) Date of publication and mention of the grant of the patent: **01.02.2012**
(21) Application number: 08172418.9
(22) Date of filing: 19.12.2008
(51) Int. Cl.: H02J 7/35

(54) **A photovoltaic system**
Photovoltaiksystem
Système photovoltaïque

(43) Date of publication of application: 23.06.2010
(73) Proprietor: ABB Research Ltd., 8050 Zürich (CH)
(72) Inventor: Stridh, Bengt, 725 97, Västerås (SE); Ängquist, Lennart, 745 71, Enköping (SE); Dijkhuizen, Frans, 730 50 Skultuna (SE); Demetriades, Georgios, 725 91, Västerås (SE); Papastergiou, Konstantinos, 722 16, Västerås (SE); Bakas, Panagiotis, 722 19, Västerås (SE); Thorburn, Stefan, 722 10, Västerås (SE); Norrga, Staffan, 118 28, Stockholm (SE)
(74) Representative: Kock, Ina

(56) References cited:
- EP-A- 1 901 414
- WO-A-2006/041296
- DE-A1- 2 646 715
- FR-A- 2 335 081
- US-A1- 2002 146 617
- US-A1- 2003 230 334

## Description

### Technical field of the Invention

The present invention relates generally to the field of photovoltaic systems. The use of photovoltaic systems to generate power is increasingly establishing itself around the globe. Photovoltaic systems, also known as solar panel systems, are easy to install, do not cost much to operate and can be used practically anywhere where sunlight is available. The various possibilities range from small fixed systems for home use right through to large solar parks with mobile solar modules that follow the position of the sun. The present invention relates specifically to the field of large solar parks.

The photovoltaic system comprises a photovoltaic source having an input terminal and an output terminal, wherein the photovoltaic system comprises a voltage adding arrangement comprising a first input terminal and an output terminal, the voltage adding arrangement is connected in series with the photovoltaic source, and in that a first route comprising a voltage source and a second route constituting a voltage source bypass extend between said first input terminal and said output terminal of the voltage adding arrangement, said first and second routes being alternately activateable, said photovoltaic system being arranged to generate an output voltage which is essentially uninfluenced by variable irradiation/weather , i.e. clouds shading the photovoltaic source.

### Background of the Invention

A photovoltaic source, such as a photovoltaic module comprising several photovoltaic cells, or a plurality of photovoltaic modules, needs for optimal operation unaffected irradiation from the sun, and the output voltage is dependent directly on the degree of the instantaneous irradiation. Thus, when a cloud is shading the photovoltaic source the output voltage of the photovoltaic system is decreased. The direct correlation between the instantaneous irradiation and the output voltage is a major issue in locations having a varying degree of irradiation.

The power mains, to which a photovoltaic source is arranged to feed electricity, requires alternating current at a specific voltage level. In order to fulfill these requirements a DC/AC converter is arranged between the photovoltaic source and the power mains, which converter must be arranged to operate at a as wide input voltage range as possible in order to manage a varying output voltage from the photovoltaic source. A converter managing a wide input voltage range is proportionately expensive as it usually is comprised of more than one stage. A conventional way of managing a greatly varying input voltage is to use a boost DC/DC converter to provide a reasonable input voltage to said DC/AC converter. The use of a boost DC/DC converter at this stage reduces the efficiency of the photovoltaic system.

### Object of the Invention

The present invention aims at obviating the aforementioned disadvantages of previously known photovoltaic systems, and at providing an improved photovoltaic system. A primary object of the present invention is to provide an improved photovoltaic system of the initially defined type which is arranged to generate an output voltage which is essentially uninfluenced by varying irradiation, i.e. a cloud shading the photovoltaic source, or if a specific photovoltaic source is malfunctioning.

It is another object of the present invention to provide a photovoltaic system, which adds voltage to the output voltage of the photovoltaic source when the latter is below a predetermined threshold value. It is another object of the present invention to provide a photovoltaic system, which may store any surplus of the output voltage in order to be self supporting with regards to the occasional need of added voltage. It is still another object of the present invention to provide a photovoltaic system capable of delivering an output power day and night. It is another object of the present invention to provide a photovoltaic system, which is arranged to generate an output voltage which is essentially uninfluenced by varying irradiation.

### Summary of the Invention

According to the invention at least the primary object is attained by means of the initially defined photovoltaic system having the features defined in the independent claim. Preferred embodiments of the present invention are further defined in the dependent claims.

According to the present invention, there is provided a photovoltaic system of the initially defined type, which is characterized in that that the voltage adding arrangement comprises a charger device connected to the voltage source of the first route, the charger device comprising a first input terminal and a second input terminal, at least one of which being connected to a charger switch.

Thus, the present invention is based on the insight that a voltage source connected in series with the photovoltaic source adds voltage when occasionally needed in order to get a less variable output voltage from the photovoltaic system, even at a location having a variable degree of instantaneous irradiation, or may be used in order to get an output power which corresponds to the instantaneous need.

The voltage source may be a fixed voltage source or a regulated voltage source, and in a preferred embodiment of the present invention, the voltage source comprises at least two batteries, which are individually connectable in series with the first route and with each other. This means that the added voltage from the voltage source may be added in a stepwise manner in order to get an as invariable output voltage of the photovoltaic system as possible.

According to a preferred embodiment, the charger device is constituted by a DC/DC converter, the first input terminal of which is connected, directly or indirectly, to an input terminal of the photovoltaic source and the second input terminal of which is connected, directly or indirectly, to an output terminal of the photovoltaic source. Thereby, the charger uses the output voltage from the photovoltaic source to charge the voltage source, and thereby the photovoltaic system is self supporting with regards to the occasional need of added voltage.

According to another preferred embodiment, the regulated voltage source of the voltage adding arrangement comprises a bidirectional DC/DC converter and a voltage source, which is connected to a first input terminal and a second input terminal of the bidirectional DC/DC converter, a first output terminal of the bidirectional DC/DC converter being connected to the first input terminal of the voltage adding arrangement and a second output terminal of the bidirectional DC/DC converter being connected to the first route at the opposite side of the route switch than the output terminal of the voltage adding arrangement and being connected by means of a charger switch, direct or indirect, to the output terminal of the photovoltaic source. Thereby the quantity of added voltage to the photovoltaic system is regulateable, which result in that the quantity of the added voltage in theory ranges from 0% to 100% of the maximum voltage level of the voltage source, or even higher than 100% if the regulator is of a suitable boost converter type.

### Further elucidation of Prior art

DE 26 46 715 discloses a photovoltaic system for the recharging of an energy source/accumulator, which photovoltaic system has a voltage output that is essentially uninfluenced by varying irradiation. The disclosed photovoltaic system comprises two generators, one of which may be a photovoltaic source and the other may be an element that can be comparable with the voltage adding arrangement of the invention. According to one embodiment of DE 26 46 715, said two generators can be arranged either in parallel or in series with each other depending on the momentary output of each generator.

FR-A-2.335.081 discloses a photovoltaic system for the recharging of an accumulator, which photovoltaic system has a voltage output that is essentially uninfluenced by varying irradiation. The photovoltaic system of FR-A-2.335.081 comprises one photovoltaic source and one capacitor circuit arrangement, the latter being comparable with one of the voltage adding arrangements of the invention. According to FR-A-2.335.081 the photovoltaic source and the capacitor circuit arrangement can be connected either in parallel or in series with each other in order to supply an appropriate output voltage to the accumulator independently of the instantaneous irradiation.

US 2003/0230334 discloses a photovoltaic system comprising a battery and a photovoltaic source which are connected in series with each other in order to charge an accumulator.

### Brief description of the drawings

A more complete understanding of the abovementioned and other features and advantages of the present invention will be apparent from the other dependent claims as well as from the following detailed description of preferred embodiments in conjunction with the appended drawings, wherein:
- Fig. 1: is a schematic illustration of a photovoltaic system,
- Fig. 2: is a schematic illustration of a regulated voltage source,
- Fig. 3: is a schematic illustration of a embodiment of the inventive first photovoltaic system,
- Fig. 4: is a schematic illustration of a second embodiment of the inventive photovoltaic system, and
- Fig. 5: is a schematic illustration of a third embodiment of the inventive photovoltaic system.

### Detailed description of preferred embodiments of the invention

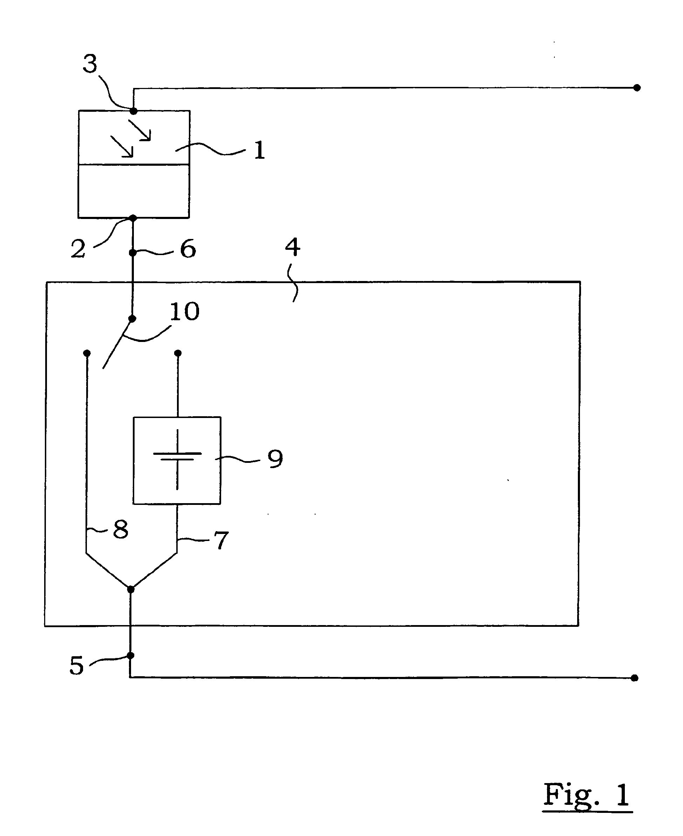

Reference is made to figure 1 which discloses a photovoltaic system 1, 4, also known as a solar panel system, comprising a photovoltaic source 1 and at least one voltage adding arrangement 4. The smallest structural part of a photovoltaic source 1 is a photovoltaic cell consisting of a light absorbing material which is connected to an external circuit. A number of photovoltaic cells, conventionally connected in series, constitute a photovoltaic module, which may be used singly or a plurality of them may be connected in series, in parallel or in any combination thereof, into photovoltaic panels. Thus, a photovoltaic source 1 having a first connector 2 and a second connector 3 according to the invention preferably comprises a photovoltaic module or a plurality of photovoltaic modules. The first connector of such a photovoltaic source will in the following be termed input terminal, while the second connector of such a photovoltaic source will be termed output terminal. The photovoltaic source 1 is designed to generate an output power at a certain current and a voltage under standard illumination/irradiation present at the location at which the specific photovoltaic system will operate. However, the photovoltaic source 1 is directly dependent on the instantaneous irradiation from the sun, which occasionally may be more or less blocked by clouds which results in that the output voltage of the photovoltaic system will vary over time. In order to overcome this problem the photovoltaic system comprises at least one voltage adding arrangement 4, which is connected in series with said photovoltaic source 1. The voltage adding arrangement 4 comprises a first connector 5 and a second connector 6, which in the figures is connected to the input terminal 2 of the photovoltaic source 1. In some versions of the invention a voltage adding arrangement may also include a third and a fourth connector. The first connector of a voltage adding arrangement will in the following be termed first input terminal, while the second connector of a voltage adding arrangement will be termed output terminal. The third and fourth connectors will when they appear be termed second input terminal and third input terminal, respectively. In the figures the photovoltaic source 1 is located downstream the voltage

adding arrangement 4. However, it should be pointed out that the mutual position of the photovoltaic source 1 and the voltage adding arrangement 4 when connected in series is insignificant and the voltage adding arrangement 4 may as well be located downstream the photovoltaic source 1. The photovoltaic system is arranged to be connected to a grid, power mains, or the like (not shown), directly or indirectly, in order to supply the output power of the photovoltaic system to a user.

The voltage adding arrangement 4 comprises a first route 7 and a second route 8 extending between the first input terminal 5 and the output terminal 6 of the voltage adding arrangement 4. The first route 7 comprises a voltage source, generally designated 9, and the second route 8 constitutes a voltage source bypass, the first route 7 and the second route 8 being alternately activateable. Preferably, the voltage adding arrangement 4 comprises a common route switch 10 for the first route 7 and the second route 8. However, the first route 7 and the second route 8 may comprise separate route switches (not shown), but it should be pointed out that only one of the first route 7 and the second route 8 shall be active at the same time, in order not to short circuit the voltage source 9. Both the first route 7 and the second route 8 may be inactive at the same time.

When the second route 8 is active the photovoltaic system is in a first mode of operation, in which the output voltage of the photovoltaic system is equal to the output voltage of the photovoltaic source 1, some structural losses may nevertheless occur. When the first route 7 is active the photovoltaic system is in a second mode of operation, in which the output voltage of the photovoltaic system is equal to the sum of the output voltage of the photovoltaic source 1 and the output voltage of the voltage adding arrangement 4, some structural losses may nevertheless occur. The photovoltaic system switches preferably from the first mode of operation to the second mode of operation when the output voltage of the photovoltaic source 1 decreases below a predetermined threshold value, and vice versa. The instantaneous need of output voltage from the photovoltaic system may be considered to raise or lower said threshold values.

The voltage source 9 may be a fixed voltage source, e.g. a battery, a plurality of batteries, a fuel cell, or the like, or a regulated voltage source, e.g. a set of batteries, or an arrangement comprising a regulator and a fixed voltage source, or the like.

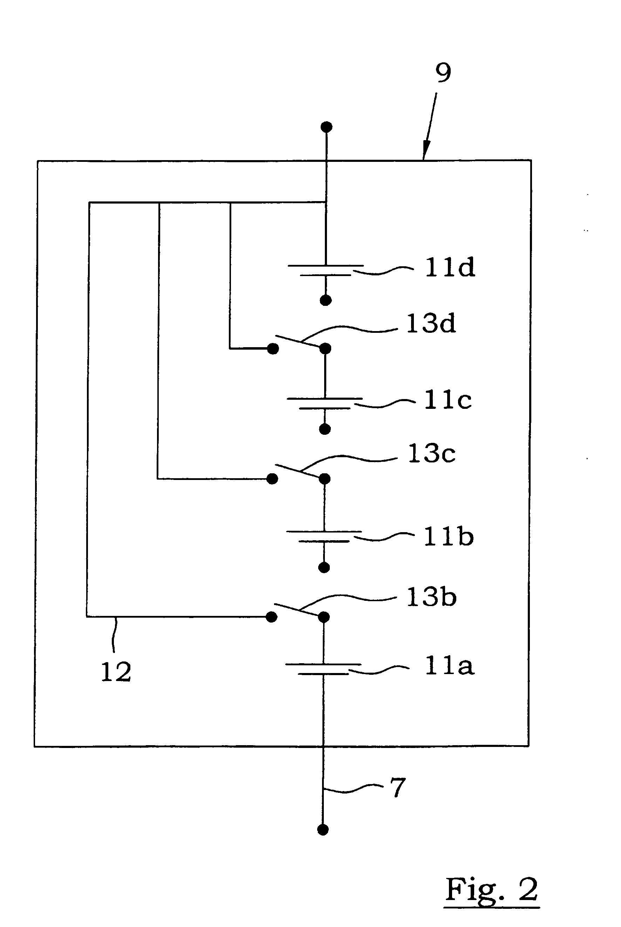

Reference is now made to figure 2, which discloses one example of a regulated voltage source 9. The disclosed regulated voltage source 9 comprises four batteries 11a, 11b, 11c, 11d, a bypass arrangement 12 of the first route 7 and three switches 13b, 13c, 13d. The default position of each switch 13b, 13c, 13d is in a disconnected position with regard to the corresponding battery 11b, 11c, 11d. The switch that at the present is the lowest switch being in the disconnected position also has to be connected to the bypass arrangement 12. However, all switches 13b, 13c, 13d, may be connected to the bypass arrangement 12 when in the disconnected positions. By connecting the switches 13b, 13c, 13d to the corresponding batteries 11b, 11c, 11d, from below and upwards, a stepwise increase of the output voltage from the regulated voltage source 9 is made, depending on the instantaneous need of added voltage to the output voltage of the photovoltaic system. Thus, the batteries 11a, 11b, 11c, 11d are individually connectable in series with the first route 7 and with each other, and other structural combinations are thus conceivable.

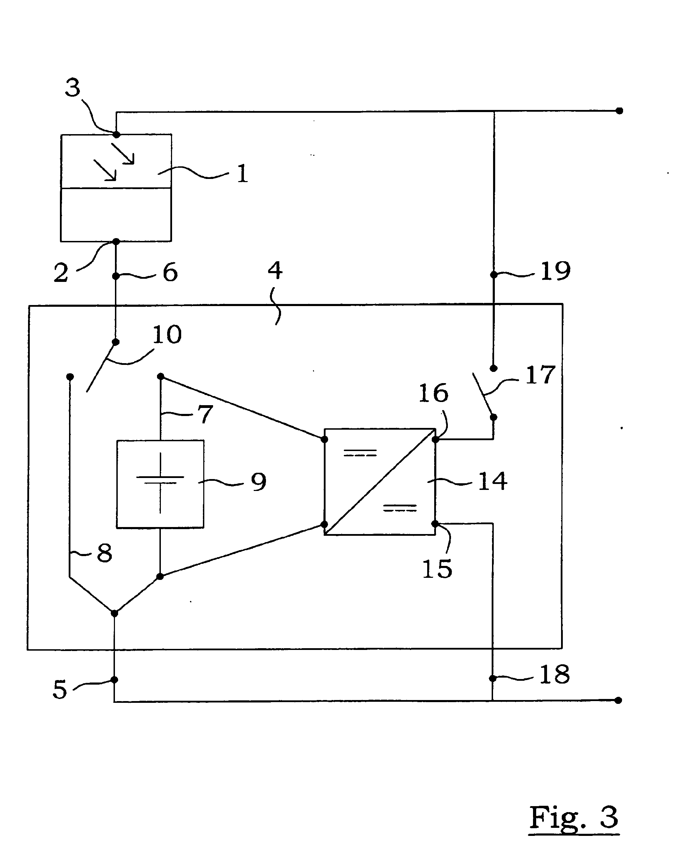

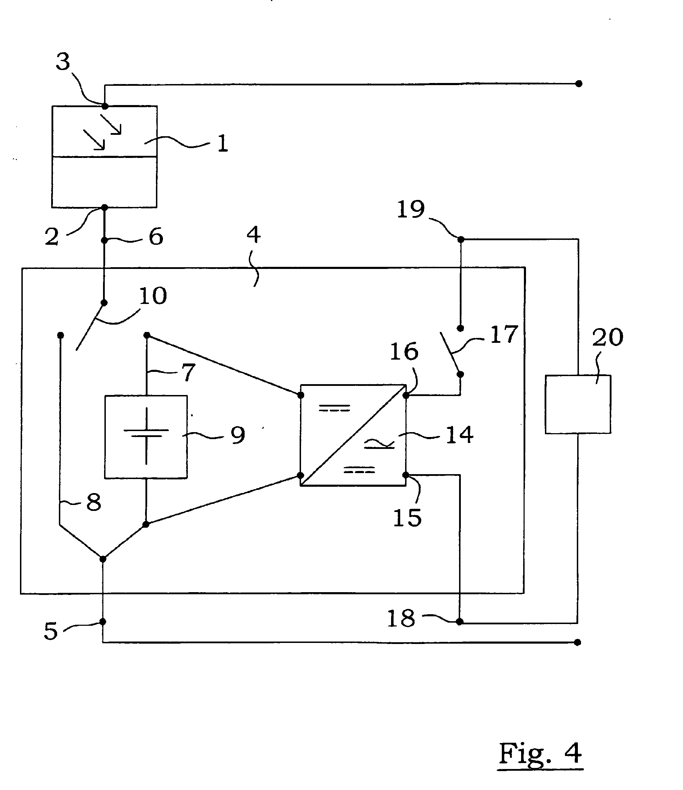

Reference is now made to figures 3,4 and which discloses a first, second and a third embodiment of the present invention, respectively.

The photovoltaic system 1, 4 disclosed by figures 3, 4, 5 is constituted by the photovoltaic system as illustrated in connection with figure 1 in which the voltage adding arrangement 4 further comprises a charger device 14 connected to the voltage source 9 of the first route 7 and the voltage source 9 is a rechargeable voltage source. The charger device 14 comprises a first input terminal 15 and a second input terminal 16, at least one of which being connected to a charger switch 17. The charger device 14 has an inactive mode when the first route 7 of the voltage adding arrangement 4 is active and the charger switch 17 is open, and a charging mode when the second route 8 of the voltage adding arrangement 4 is active and the charger switch 17 is closed. The use of a charging device 14 implies that the voltage source 9 is rechargeable. The voltage source 9 may as a basis only be charged when there is no voltage output therefrom. However, if the voltage source 9 comprises a set of batteries the, at the present, unused batteries may be charged even if there is a voltage output from the voltage source 9. Thus, when the photovoltaic system is in the abovementioned first mode of operation the charging device 14 may be in either the inactive mode or the charging mode, and when the photovoltaic system is in the abovementioned second mode of operation the charging device 14 must be in the inactive mode.

Reference is now made to figure 3. The charger device is constituted by a DC/DC converter 14, or the like, the first input terminal 15 of which is connected to a second input terminal 18 of the voltage adding arrangement 4, which second input terminal 18 is connected to the first input terminal 5 of the voltage adding arrangement 4. The second input terminal 16 of the DC/DC converter 14 is connected to a third input terminal 19 of the voltage adding arrangement 4, which third input terminal 19 is connected to the output terminal 3 of the photovoltaic source 1. It should be pointed out that in this embodiment the first input terminal 15 of the DC/DC converter 14 may be connected directly to the first input terminal 5 of the voltage adding arrangement or to the input terminal 2 of the photovoltaic source 1, and the second input terminal 16 of the DC/DC converter 14 may be connected directly to the output terminal 3 of the photovoltaic source 1. When the DC/DC converter 14 is in the abovementioned charging mode, the output voltage from the photovoltaic source 1 is used to charge the voltage source 9. The DC/DC converter 14 may be put in charging mode when the capability of the voltage source 9 reaches a predetermined level and/or when there is a surplus of energy from the photovoltaic source 1 with regards to the required output voltage of the photovoltaic system.

Reference is now made to figure 4. The charger device is constituted by a AC/DC converter or a DC/DC converter 14, the first input terminal 15 of which is connected to the second input terminal 18 of the voltage adding arrangement 4. The second input terminal 16 of the AC/DC converter or the DC/DC converter 14 is connected to the third input terminal 19 of the voltage adding arrangement 4. Said second input terminal 18 and third input terminal 19 of the voltage adding arrangement 4 is connectable to an external power source 20, e.g. a grid, power mains, a motor, a generator, or the like. If the external power source 20 is a AC power source the charging device 14 shall be constituted by a AC/DC converter 14, or the like, and if the external power source 20 is a DC power source the charging device shall be constituted by a DC/DC converter 14, or the like. When the AC/DC converter or the DC/DC converter 14 is in the abovementioned charging mode, the external power source 20 is used to charge the voltage source 9. The AC/DC converter or the DC/DC converter 14 may be put in charging mode when the capability of the voltage source 9 reaches a predetermined level and/or when there is no voltage output from the voltage source 9. Preferably, the charging device 14 is set in charging mode during the night, when a slower charging of the voltage source 9 is admitted and thus a smaller charging device 14 is required.

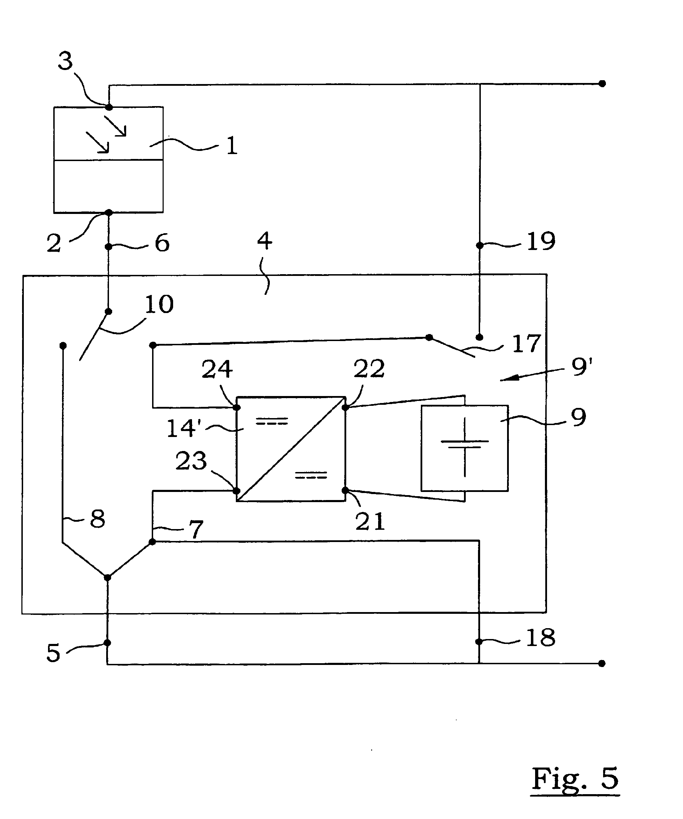

Reference is now made to figure 5, which discloses a third embodiment of the present invention.

The voltage adding arrangement 4 in the shown embodiment comprises a regulated voltage source 9'. Said regulated voltage source 9' comprises a voltage source 9 and a charger device 14'. The charger device 14' is constituted by a bidirectional DC/DC converter, or the like, and the voltage source 9 is preferably a fixed voltage source, e.g. a battery, or in it self a regulated voltage source, e.g. as disclosed in connection with figure 2. The voltage source 9 is connected to a first input terminal 21 and to a second input terminal 22 of the bidirectional DC/DC converter 14', a first output terminal 23 of the bidirectional DC/DC converter 14' being connected to the first input terminal 5 of the voltage adding arrangement 4, and a second output terminal 24 of the bidirectional DC/DC converter 14' being connected to the first route 7, at the opposite side of the route switch 10 than the output terminal 6 of the voltage adding arrangement 4, and being connected by means of a charger switch 17 to the third input terminal 19 of the voltage adding arrangement 4, which third input terminal 19 is connected to the output terminal 3 of the photovoltaic source 1. It should be pointed out that in this embodiment the first output terminal 23 of the bidirectional DC/DC converter 14' may as well be connected to the second input terminal 18 of the voltage adding arrangement 4, and the second output terminal 24 of the bidirectional DC/DC converter 14' may be connected by means of the charger switch 17 directly to the output terminal 3 of the photovoltaic source 1.

The bidirectional DC/DC converter 14' has a regulator mode when the first route 7 of the voltage adding arrangement 4 is active and the charger switch 17 is open, and a charging mode when the second route 8 of the voltage adding arrangement 4 is active and the charger switch 17 is closed. When the bidirectional DC/DC converter 14' is in the regulator mode, the output voltage from the voltage source may in theory be everything between 0% and 100% of the capacity of the voltage source 9, or even higher than 100% if the regulator is of a suitable boost converter type, some structural losses may nevertheless occur. Thus, when the photovoltaic system is in the abovementioned first mode of operation the bidirectional DC/DC converter 14' may be in either the regulator mode or in the charging mode, and when the photovoltaic system is in the abovementioned second mode of operation the bidirectional DC/DC converter 14' must be in the regulator mode. The bidirectional DC/DC converter 14' may be put in charging mode when the capacity of the voltage source 9 reaches a predetermined level and/or when there is a surplus of energy from the photovoltaic source 1 with regards to the required output voltage of the photovoltaic system.

As an alternative to the embodiment according to figure 5, the bidirectional DC/DC converter 14' could be exchanged by a device only capable of regulating the output voltage of the voltage source 9. Then the second output terminal 24 of that device should not be connected to the third input terminal 19 of the voltage adding arrangement 4. In addition, a separate charging device, e.g. as disclosed in connection with the first and second embodiments according to figures 3 and 4, respectively, could be used. That is, such an alternative should be constituted by said first or second embodiment of the present invention having a regulated voltage source with a continuously variable output voltage.

### Feasible modifications of the Invention

This patent application is intended to cover all adjustments and variants of the preferred embodiments described herein, thus the present invention is defined by the wording of the appended claims and the equivalents thereof. Thus, the photovoltaic system may be modified in all kinds of ways within the scope of the appended claims.

It shall be pointed out that the word or expression "voltage adding arrangement" not necessarily has to be delimited by a box as in the shown embodiments. Furthermore, all input and output terminals disclosed in this document do not need to be physical entities.

It shall also be pointed out that all switches preferably is controlled by a control system (not shown) which for instance may supervise the instantaneous capacity of the voltage source, the instantaneous output voltage from the photovoltaic source, the instantaneous irradiation, etc.

It shall also be pointed out that the capacity of the voltage source may be a part of, equal to, or more than, the capacity of the photovoltaic source, all depending on the specific application. If the photovoltaic system is expected to have an output voltage during long cloudy periods or during the nights, the capacity of the voltage source should preferably be equal to or more than the capacity of the photovoltaic source. If the voltage source is expected only to support the photovoltaic source during short periods of decreased irradiation, the capacity of the voltage source could for instance be about 10-40% 11 capacity of the photovoltaic source.

For instance, it shall be pointed out that if the photovoltaic source is located upstream of the voltage adding arrangement, instead of downstream like all shown embodiments, the charging devices according to the first and third embodiments of the present invention should be connected to the input terminal of the photovoltaic source and to the output terminal of the voltage adding arrangement.

It shall thus be pointed out that all information about/concerning terms such as above, below, under, upper, first, second, third, etc., shall be interpreted/read having the equipment oriented according to the figures, having the drawings oriented such that the references can be properly read. Thus, such terms only indicates mutual relations in the shown embodiments, which relations may be changed if the inventive equipment is provided with another structure/design.

It shall also be pointed out that even thus it is not explicitly stated that features from a specific embodiment may be combined with features from another embodiment, the combination shall be considered obvious, if the combination is possible. For instance, the charging arrangement according to the first embodiment of the present invention may be supplemented with the charging arrangement according to the second embodiment of the present invention, in order to admit charging by night if needed.

It should also be pointed out that other photovoltaic sources and/or voltage adding arrangements may be connected to the inventive photovoltaic system in parallel, in series, or in any combination thereof.

In addition, a common charger device may be used to charge several voltage sources.

Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps.

## Claims

1. A photovoltaic system for generating an output voltage which is essentially uninfluenced by varying irradiation, the photovoltaic system comprising a photovoltaic source (1) having a negative terminal (2) and a positive terminal (3), wherein the photovoltaic system comprises a voltage adding arrangement (4) comprising a first negative terminal (5) and a positive terminal (6), the voltage adding arrangement (4) is connected in series with the photovoltaic source (1), and in that a first route (7) comprising a rechargeable voltage source (9, 9') and a second route (8) constituting a voltage source bypass extend between said first negative terminal (5) and said positive terminal (6) of the voltage adding arrangement (4), said first and second routes being alternately activateable, **characterized in that** the voltage adding arrangement (4) further comprises a charger switch (17) and a charger device (14, 14') connected to the voltage source (9, 9') of the first route (7), the charger device (14, 14') comprising a first input terminal (15) and a second input terminal (16), at least one of which being connected to the charger switch (17) by means of which the charger device (14, 14') can be connected to the photovoltaic source (1) or an external power source (20) in order to charge the voltage source (9,9').

2. The photovoltaic system according to claim 1, wherein the photovoltaic source (1) is constituted by a photovoltaic module or a plurality of photovoltaic modules.

3. The photovoltaic system according to claim 1 or 2, wherein the voltage adding arrangement (4) comprises a common route switch (10) for the first route (7) and the second route (8).

4. The photovoltaic system according to claim 1 or 2, wherein the first route (7) and the second route (8) of the voltage adding arrangement (4) comprises separate route switches.

5. The photovoltaic system according to any preceding claim, wherein the voltage source (9, 9') is constituted by a fixed voltage source or a regulated voltage source.

6. The photovoltaic system according to any proceeding claim, wherein the voltage source (9) is constituted by at least one battery.

7. The photovoltaic system according to any proceeding claim, wherein the voltage source (9) comprises at least two batteries (11a, 11b, 11c, 11d), which are individually connectable in series with the first route (7) and with each other.

8. The photovoltaic system according to any proceeding claim, wherein the charger device (14) has an inactive mode when the charger switch (17) is open, and a charging mode when the second route (8) of the voltage adding arrangement (4) is active and the charger switch (17) is closed.

9. The photovoltaic system according to any proceeding claim, wherein the charger device (14) is constituted by a DC/DC converter, the first input terminal (15) of which is connected, directly or indirectly, to the input terminal (2) of the photovoltaic source (1), and the second input terminal (16) of which is connected, directly or indirectly, to the output terminal (3) of the photovoltaic source (2).

10. The photovoltaic system according to any of claims 1 to 8, wherein the charger device (14) is constituted by a AC/DC converter or a DC/DC converter, the first input terminal (15) of which is connected to a second input terminal (18) of the voltage adding arrangement (4) and the second input terminal (16) of which is connected to a third input terminal (19) of the voltage adding arrangement (4), said second and third input terminals of the voltage adding arrangement (4) being connectable to an external power source (20).

11. The photovoltaic system according to any of claims 1-7, wherein the voltage adding arrangement (4) comprises a regulated voltage source (9'), which comprises a voltage source (9) and a charger device (14'), which charger device (14') is constituted by a bidirectional DC/DC converter, the voltage source (9) being connected to a first input terminal (21) and a second input terminal (22) of the bidirectional DC/DC converter (14'), a first output terminal (23) of the bidirectional DC/DC converter (14') being connected to the first input terminal (5) of the voltage adding arrangement (4), and a second output terminal (24) of the bidirectional DC/DC converter (14') being connected to the first route (7) at the opposite side of the route switch (10) than the output terminal (6) of the voltage adding arrangement (4) and being connected by means of a charger switch (17), direct or indirect, to the output terminal (3) of the photovoltaic source (1).

12. The photovoltaic system according to claim 11, wherein the bidirectional DC/DC converter (14') has a regulator mode when the first route (7) of the voltage adding arrangement (4) is active and the charger switch (17) is open, and a charging mode when the second route (8) of the voltage adding arrangement (4) is active and the charger switch (17) is closed.

## Patentansprüche

1. Fotovoltaiksystem zum Generieren einer Ausgangsspannung, die durch variierende Einstrahlung im Wesentlichen nicht beeinflusst wird, wobei das Fotovoltaiksystem eine Fotovoltaikquelle (1) mit einem negativen Anschluss (2) und einem positiven Anschluss (3) umfasst, wobei das Fotovoltaiksystem eine spannungshinzufügende Anordnung (4) umfasst, die einen ersten negativen Anschluss (5) und einen positiven Anschluss (6) umfasst, wobei die spannungshinzufügende Anordnung (4) in Reihe mit der Fotovoltaikquelle (1) geschaltet ist, und dass sich eine erste Route (7), die eine aufladbare Spannungsquelle (9, 9') umfasst, und eine zweite Route (8), die einen Spannungsquellenbypass darstellt, zwischen dem ersten negativen Anschluss (5) und dem positiven Anschluss (6) der spannungshinzufügenden Anordnung (4) erstrecken, wobei die erste und zweite Route abwechselnd aktiviert werden können,
**dadurch gekennzeichnet, dass** die spannungshinzufügende Anordnung (4) weiterhin einen Ladegerätschalter (17) und eine Ladegeräteinrichtung (14, 14') umfasst, angeschlossen an die Spannungsquelle (9, 9') der ersten Route (7), wobei die Ladegeräteinrichtung (14, 14') einen ersten Eingangsanschluss (15) und einen zweiten Eingangsanschluss (16) umfasst, von denen mindestens einer an den Ladegerätschalter (17) angeschlossen ist, wodurch die Ladegeräteinrichtung (14, 14') an die Fotovoltaikquelle (1) oder an eine externe Stromquelle (20) angeschlossen werden kann, um die Spannungsquelle (9, 9') zu laden.

2. Fotovoltaiksystem nach Anspruch 1, wobei die Fotovoltaikquelle (1) durch ein Fotovoltaikmodul oder mehrere Fotovoltaikmodule gebildet wird.

3. Fotovoltaiksystem nach Anspruch 1 oder 2, wobei die spannungshinzufügende Anordnung (4) einen gemeinsamen Routenschalter (10) für die erste Route (7) und die zweite Route (8) umfasst.

4. Fotovoltaiksystem nach Anspruch 1 oder 2, wobei die erste Route (7) und die zweite Route (8) der spannungshinzufügenden Anordnung (4) separate Routenschalter umfassen.

5. Fotovoltaiksystem nach einem vorhergehenden Anspruch, wobei die Spannungsquelle (9, 9') durch eine feste Spannungsquelle oder eine geregelte Spannungsquelle gebildet wird.

6. Fotovoltaiksystem nach einem vorhergehenden Anspruch, wobei die Spannungsquelle (9) durch mindestens eine Batterie gebildet wird.

7. Fotovoltaiksystem nach einem vorhergehenden Anspruch, wobei die Spannungsquelle (9) mindestens zwei Batterien (11a, 11b, 11c, 11d) umfasst, die individuell in Reihe mit der ersten Route (7) und miteinander geschaltet werden können.

8. Fotovoltaiksystem nach einem vorhergehenden Anspruch, wobei die Ladegeräteinrichtung (14) einen inaktiven Modus, wenn der Ladegerätschalter (17) offen ist, und einen Lademodus, wenn die zweite Route (8) der spannungshinzufügenden Anordnung (4) aktiv ist und der Ladegerätschalter (17) geschlossen ist, aufweist.

9. Fotovoltaiksystem nach einem vorhergehenden Anspruch, wobei die Ladegeräteinrichtung (14) durch einen DC-DC-Wandler gebildet wird, dessen erster Eingangsanschluss (15) direkt oder indirekt an den Eingangsanschluss (2) der Fotovoltaikquelle (1) angeschlossen ist und dessen zweiter Eingangsanschluss (16) direkt oder indirekt an den Ausgangsanschluss (3) der Fotovoltaikquelle (1) angeschlossen ist.

10. Fotovoltaiksystem nach einem der Ansprüche 1 bis 8, wobei die Ladegeräteinrichtung (14) durch einen AC-DC-Wandler oder einen DC-DC-Wandler gebildet wird, dessen erster Eingangsanschluss (15) an einen zweiten Eingangsanschluss (18) der spannungshinzufügenden Anordnung (4) angeschlossen ist und dessen zweiter Eingangsanschluss (16) an einen dritten Eingangsanschluss (19) der spannungshinzufügenden Anordnung (4) angeschlossen ist, wobei der zweite und dritte Eingangsanschluss der spannungshinzufügenden Anordnung (4) an eine externe Stromquelle (20) angeschlossen werden können.

11. Fotovoltaiksystem nach einem der Ansprüche 1 bis 7, wobei die spannungshinzufügende Anordnung (4) eine geregelte Spannungsquelle (9') umfasst, die eine Spannungsquelle (9) und eine Ladegeräteinrichtung (14') umfasst, wobei die Ladegeräteinrichtung (14) durch einen bidirektionalen DC-DC-Wandler gebildet wird, die Spannungsquelle (9) an einen ersten Eingangsanschluss (21) und einen zweiten Eingangsanschluss (22) des bidirektionalen DC-DC-Wandlers (14') angeschlossen ist, ein erster Ausgangsanschluss (23) des bidirektionalen DC-DC-Wandlers (14') an den ersten Eingangsanschluss (5) der spannungshinzufügenden Anordnung (4) angeschlossen ist und ein zweiter Ausgangsanschluss (24) des bidirektionalen DC-DC-Wandlers (14') an die erste Route (7) auf der gegenüberliegenden Seite des Routenschalters (10) als der Ausgangsanschluss (6) der spannungshinzufügenden Anordnung (4) angeschlossen ist und mit Hilfe eines Ladegerätschalters (17) direkt oder indirekt an den Ausgangsanschluss (3) der Fotovoltaikquelle (1) angeschlossen ist.

12. Fotovoltaiksystem nach Anspruch 11, wobei der bidirektionale DC-DC-Wandler (14') einen Reglermodus aufweist, wenn die erste Route (7) der spannungshinzufügenden Anordnung (4) aktiv ist und der Ladegerätschalter (17) offen ist, und einen Lademodus, wenn die zweite Route (8) der spannungshinzufügenden Anordnung (4) aktiv ist und der Ladegerätschalter (17) geschlossen ist.

## Revendications

1. Système photovoltaïque permettant de générer une tension de sortie essentiellement insensible aux variations de rayonnement, le système photovoltaïque comprenant une source photovoltaïque (1) possédant une borne négative (2) et une borne positive (3), le système photovoltaïque comprenant un montage additionneur de tension (4) comprenant une première borne négative (5) et une borne positive (6), le montage additionneur de tension (4) étant relié en série avec la source photovoltaïque (1), et un premier chemin (7) comprenant une source de tension rechargeable (9, 9') et un deuxième chemin (8) constituant une dérivation de source de tension s'étendant entre ladite première borne négative (5) et ladite borne positive (6) du montage additionneur de tension (4), lesdits premier et deuxième chemins étant activables en alternance,
**caractérisé en ce que** le montage additionneur de tension (4) comprend en outre un commutateur (17) de chargeur et un dispositif chargeur (14, 14') relié à la source de tension (9, 9') du premier chemin (7), le dispositif chargeur (14, 14') comprenant une première borne d'entrée (15) et une deuxième borne d'entrée (16) dont une au moins est reliée au commutateur (17) de chargeur par le biais duquel le dispositif chargeur (14, 14') peut être relié à la source photovoltaïque (1) ou à une source d'alimentation externe (20) afin de charger la source de tension (9, 9').

2. Système photovoltaïque selon la revendication 1, la source photovoltaïque (1) étant constituée d'un module photovoltaïque ou d'une pluralité de modules photovoltaïques.

3. Système photovoltaïque selon la revendication 1 ou 2, le montage additionneur de tension (4) comprenant un commutateur commun (10) de chemin pour le premier chemin (7) et le deuxième chemin (8).

4. Système photovoltaïque selon la revendication 1 ou 2, le premier chemin (7) et le deuxième chemin (8) du montage additionneur de tension (4) comprenant des commutateurs de chemin distincts.

5. Système photovoltaïque selon l'une quelconque des revendications précédentes, la source de tension (9, 9') étant constituée d'une source de tension fixe ou d'une source de tension régulée.

6. Système photovoltaïque selon l'une quelconque des revendications précédentes, la source de tension (9) étant constituée d'au moins une batterie.

7. Système photovoltaïque selon l'une quelconque des revendications précédentes, la source de tension (9) comprenant au moins deux batteries (11a, 11b, 11c, 11d) susceptibles d'être individuellement reliées en série avec le premier chemin (7) et l'une (les unes) avec l'autre (les autres).

8. Système photovoltaïque selon l'une quelconque des revendications précédentes, le dispositif chargeur (14) possédant un mode inactif lorsque le commutateur (17) de chargeur est ouvert, et un mode de charge lorsque le deuxième chemin (8) du montage additionneur de tension (4) est actif et le commutateur (17) de chargeur est fermé.

9. Système photovoltaïque selon l'une quelconque des revendications précédentes, le dispositif chargeur (14) étant constitué d'un convertisseur continu-continu dont la première borne d'entrée (15) est reliée, directement ou indirectement, à la borne d'entrée (2) de la source photovoltaïque (1) et dont la deuxième borne d'entrée (16) est reliée, directement ou indirectement, à la borne de sortie (3) de la source photovoltaïque (1).

10. Système photovoltaïque selon l'une quelconque des revendications 1 à 8, le dispositif chargeur (14) étant constitué d'un convertisseur alternatif-continu ou d'un convertisseur continu-continu dont la première borne d'entrée (15) est reliée à une deuxième borne d'entrée (18) du montage additionneur de tension (4) et dont la deuxième borne d'entrée (16) est reliée à une troisième borne d'entrée (19) du montage additionneur de tension (4), lesdites deuxième et troisième bornes d'entrée du montage additionneur de tension (4) étant susceptibles d'être reliées à une source d'alimentation externe (20).

11. Système photovoltaïque selon l'une quelconque des revendications 1 à 7, le montage additionneur de tension (4) comprenant une source de tension régulée (9') comprenant une source de tension (9) et un dispositif chargeur (14'), lequel dispositif chargeur (14') est constitué d'un convertisseur continu-continu bidirectionnel, la source de tension (9) étant reliée à une première borne d'entrée (21) et à une deuxième borne d'entrée (22) du convertisseur continu-continu bidirectionnel (14'), une première borne de sortie (23) du convertisseur continu-continu bidirectionnel (14') étant reliée à la première borne d'entrée (5) du montage additionneur de tension (4), et une deuxième borne de sortie (24) du convertisseur continu-continu bidirectionnel (14') étant reliée au premier chemin (7) du côté du commutateur (10) de chemin opposé à celui de la borne de sortie (6) du montage additionneur de tension (4), et étant reliée par le biais d'un commutateur (17) de chargeur, directement ou indirectement, à la borne de sortie (3) de la source photovoltaïque (1).

12. Système photovoltaïque selon la revendication 11, le convertisseur continu-continu bidirectionnel (14') possédant un mode de régulation lorsque le premier chemin (7) du montage additionneur de tension (4) est actif et le commutateur (17) de chargeur est ouvert, et un mode de charge lorsque le deuxième chemin (8) du montage additionneur de tension (4) est actif et le commutateur (17) de chargeur est fermé.
